# EUROPEAN PATENT APPLICATION

(11) **EP 3 750 617 A1**
(43) Date of publication of application: **16.12.2020**
(21) Application number: 18903371.5
(22) Date of filing: 26.02.2018
(51) Int. Cl.: B01D 53/32

(54) **SYSTEM FOR REDUCING PARTICULATE MATTER IN EXHAUST GAS**

(30) Priority: 05.02.2018 KR 20180014237
(71) Applicant: The Prime Solution L.L.C., Seoul 05510 (KR)
(72) Inventor: SON, Chang Soo, Seoul 05649 (KR)
(74) Representative: Scheele, Friedrich
(86) International application number: PCT/KR2018/002310
(87) International publication number: WO 2019/151564

(57) **Abstract**

A disclosed system for reducing particulate matter in exhaust gas includes: a processing object unit having a preset system voltage and configured to produce exhaust gas containing particulate matters (PMs); a first conductor provided in the form of a tubular body in which the exhaust gas flows and to which a ground power supply is connected; a second conductor disposed in the first conductor and having an emitter which comes into contact with the exhaust gas and generates non-thermal plasma (NTP); an insulator configured to electrically separate the second conductor from the first conductor; and a transformer provided to be electrically insulated from the first conductor and fixedly disposed outside the tubular body that constitutes the first conductor, the transformer being configured to receive the system voltage, raise the system voltage to a preset operating voltage, and apply the preset operating voltage to the second conductor, in which the preset operating voltage is applied such that a direct current voltage having a preset magnitude is continuously applied.

## Description

### [Technical Field]

The present disclosure relates to a system for reducing particulate matter in exhaust gas, and particularly, to a system for reducing particulate matter in exhaust gas, which uses non-thermal plasma (NTP) to remove particulate matters (PMs) contained in exhaust gas generated from a vehicle, a thermal power station, a semiconductor process, or the like, thereby reducing the amount of particulate matters to be released into the atmosphere.

### [Background Art]

This section provides background information related to the present disclosure which is not necessarily prior art.

Internal combustion engines, which are supplied with fuel such as gasoline or diesel, are major causes of environmental pollution that affects the entire environment as well as human health and life.

Carbon monoxide (CO), nitrogen oxide (NOx), sulfur dioxide (SO₂), non-methane hydrocarbon (NMHC), and particulate matters (PMs) are produced as a result of incomplete combustion in the gasoline or diesel engines.

Despite regulations that have been in force for decades, these pollutants continue to be released into the environment in excess of regulatory standards even in the countries with strict emission regulations.

Moreover, technologies that meet these emission standards are difficult to obtain even at present.

One technique, which offers great potential for reducing the emission of contaminants, especially particulate matters from the combustion engines, is to use non-thermal plasma (NTP) to improve combustion efficiency and reduce the emission of exhaust gas.

Studies related to combustion efficiency report that the non-thermal plasma (NTP) can be used to more easily and perfectly divide large organic fuel molecules into smaller molecules. Examples of such studies are disclosed in US Patent Application Publication Nos. 2004/0185396, 2005/0019714, and 2008/0314734.

On the other hand, other studies report that the non-thermal plasma (NTP) can be used to directly reduce the emission of exhaust gas.

For example, the majority of studies related to the non-thermal plasma (NTP) have been conducted on systems configured to reduce the emission of NOx, and examples of these studies are disclosed in U.S. Patent Nos. 6,482,368 and 6,852,200.

On the other hand, other systems reduce particulate matters (PMs) by using the non-thermal plasma (NTP). Examples of these systems are disclosed in U.S. Patent No. 5,263,317 and U.S. Patent Application Publication No. 2007/0045101.

### [Disclosure]

### [Technical Problem]

An object of the present disclosure is to provide a non-thermal plasma (NTP) based system for reducing particulate matter in exhaust gas, which improves efficiency of power consumed to reduce particulate matters (PMs).

Another object of the present disclosure is to provide a non-thermal plasma (NTP) based system for reducing particulate matter in exhaust gas, which is capable of being applied even to a situation in which it is difficult to treat particulate matters (PMs), such as a situation in which a discharge path for exhaust gas (e.g., a discharge path in a truck) is short or a situation in which it is difficult to directly attach the system because there is no available space around a discharge path.

### [Technical Solution]

This section provides a general summary of the disclosure and is not a comprehensive disclosure of its full scope or all of its features.

In order to achieve the above-mentioned objects, a system for reducing particulate matter in exhaust gas according to one aspect of the present disclosure includes: a processing object unit having a preset system voltage and configured to produce exhaust gas containing particulate matters (PMs); a first conductor provided in the form of a tubular body in which the exhaust gas flows and to which a ground power supply is connected; a second conductor disposed in the first conductor and having an emitter which comes into contact with the exhaust gas and generates non-thermal plasma (NTP); an insulator configured to electrically separate the second conductor from the first conductor; and a transformer provided to be electrically insulated from the first conductor and fixedly disposed outside the tubular body that constitutes the first conductor, the transformer being configured to receive the system voltage, raise the system voltage to a preset operating voltage, and apply the preset operating voltage to the second conductor, in which the preset operating voltage is applied such that a direct current voltage having a preset magnitude is continuously applied.

The system for reducing particulate matter in exhaust gas according to one aspect of the present disclosure may include a system control unit configured to control connection of power between the system voltage of the processing object unit and the transformer.

In the system for reducing particulate matter in exhaust gas according to one aspect of the present disclosure, the second conductor may include: a vertical rod disposed in a radial direction of the first conductor; a horizontal rod extending from an end of the vertical rod in a direction parallel to a flow direction of the exhaust gas; and an emitter provided at an end of the horizontal rod and having a plurality of protrusions formed on an outer surface of the emitter and each having a cutting edge.

In the system for reducing particulate matter in exhaust gas according to one aspect of the present disclosure, the insulator may be made of an electrically insulating material, made of a ceramic material having a surface treated with glaze, and provided to surround the vertical rod, one end of the insulator may be disposed inside the first conductor, the other end of the insulator may be disposed outside the first conductor to electrically separate the second conductor from the first conductor, and a coupling groove, to which the horizontal rod is fitted, may be provided at one end of the insulator, which is disposed in the first conductor, so that a coupled state between the first conductor and the second conductor is constantly maintained.

The system for reducing particulate matter in exhaust gas according to one aspect of the present disclosure may include an anti-arcing member provided to cover one of the two ends of the insulator which is disposed inside the first conductor, in which the anti-arcing member is joined and electrically connected to the horizontal rod and made of a material having resistance to corrosion (erosion) caused by electric discharge.

In the system for reducing particulate matter in exhaust gas according to one aspect of the present disclosure, the anti-arcing member may have electric discharge protrusions directed toward an inner surface of the first conductor and each having a cutting edge.

In the system for reducing particulate matter in exhaust gas according to one aspect of the present disclosure, the first conductor may have the tubular body which is bent at least once so that an inlet and an outlet for the exhaust gas are disposed side by side, the system may have a rectangular parallelepiped chamber in which the first conductor is received, the inlet and the outlet may be disposed outside the chamber, and the transformer may be fixed at one side of an outer surface of the chamber.

In the system for reducing particulate matter in exhaust gas according to one aspect of the present disclosure, the first conductor may have a plurality of straight sections arranged in parallel with one another as the first conductor is bent, and the one or more second conductors may be provided in each of the plurality of straight sections.

In the system for reducing particulate matter in exhaust gas according to one aspect of the present disclosure, the second conductor may be provided such that the emitters are provided at one end and the other end of the second conductor in a longitudinal direction of each of the plurality of straight sections.

### [Advantageous Effects]

According to the present disclosure, the transformer is provided and coupled to the first conductor, such that a path through which a raised high voltage is transmitted to the second conductor may be shortened, thereby minimizing a loss.

According to the present disclosure, since the first conductor is bent, it is possible to improve efficiency in treating particulate matters even in the case of a processing object unit (e.g., a truck) having a structure in which it is difficult to treat the particulate matters (PMs), such as a case in which a discharge path for exhaust gas (e.g., a discharge path in a truck) is short or a case in which it is difficult to directly attach the system because there is no available space around a discharge path.

In addition, the system for reducing particulate matters may be modularized and applied, thereby improving installation convenience.

According to the present disclosure, since a predetermined level of direct current is continuously applied to the second conductor, it is possible to prevent particulate matters (PMs) from being incompletely removed or degraded due to overshooting caused by the application of pulse power, and to prevent particulate matters (PMs) or products degraded from the particulate matters from being accumulated on a surface of the insulator.

Therefore, it is possible to prevent a deterioration in efficiency of the system for reducing particulate matter in exhaust gas.

According to the present disclosure, the anti-arcing member may prevent the occurrence of arcing caused by particulate matters (PMs) or products degraded from the particulate matters which are accumulated on the surface of the insulator.

Therefore, it is possible to prevent a deterioration in efficiency of the system for reducing particulate matter in exhaust gas.

According to the present disclosure, the anti-arcing member and the coupling groove formed at the end of the insulator may improve the convenience in assembling the second conductor and the insulator, and the second conductor may be disposed at the central portion of the first conductor so as to be in parallel with exhaust gas without a separate operation.

### [Description of Drawings]

FIG. 1 is a view illustrating one exemplary embodiment of a system for reducing particulate matter in exhaust gas according to the present disclosure.
FIG. 2 is a view illustrating an example of a second conductor in FIG. 1.
FIGS. 3 and 4 are views illustrating modified examples of an anti-arcing member in FIG. 2.
FIGS. 5 to 8 are views illustrating modified examples of first and second conductors in FIG. 1.

### [Modes of the Invention]

Hereinafter, an exemplary embodiment of a system for reducing particulate matter in exhaust gas according to the present disclosure will be described in detail with reference to the drawings.

However, it should be noted that the spirit of the present disclosure is not limited by the following exemplary embodiment, the following exemplary embodiment may be easily substituted with or changed to various exemplary embodiments by those skilled in the art without departing from the technical spirit of the present disclosure, and the various exemplary embodiments also belong to the technical spirit of the present disclosure.

In addition, the terms used herein are selected for convenience of description and should be appropriately interpreted as a meaning that conforms to the technical spirit of the present disclosure without being limited to a dictionary meaning when recognizing the technical contents of the present disclosure.

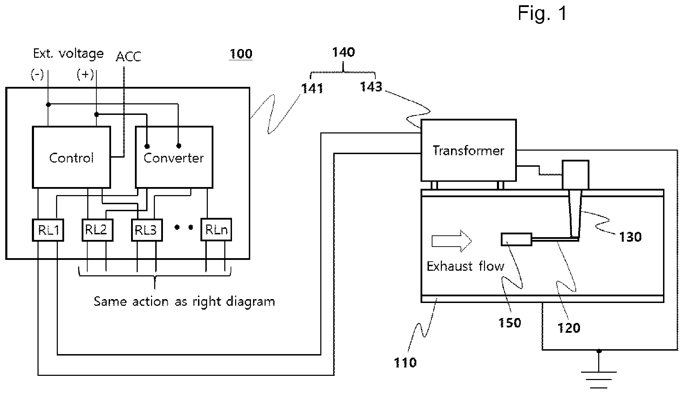

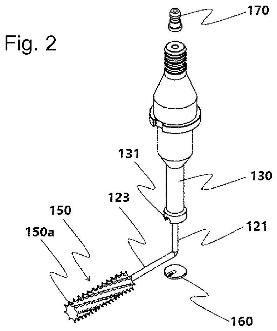

FIG. 1 is a view illustrating one exemplary embodiment of a system for reducing particulate matter in exhaust gas according to the present disclosure, and FIG. 2 is a view illustrating an example of a second conductor in FIG. 1.

Referring to FIGS. 1 and 2, a system 100 for reducing particulate matter in exhaust gas according to the present exemplary embodiment includes a processing object unit (not illustrated), a first conductor 110, a second conductor 120, an insulator 130, and a transformer 143.

The processing object unit (not illustrated) is configured as a device having a preset system voltage and configured to produce exhaust gas containing particulate matters (PMs). Representative examples of the processing object unit may include an apparatus (e.g., a vehicle) operated by an internal combustion engine, a thermal power station, and a semiconductor manufacturing process.

In this case, the system voltage means a voltage of a power source device (or a power storage device) adopted to operate the processing object unit (not illustrated).

Meanwhile, in the system 100 for reducing particulate matter in exhaust gas according to the present exemplary embodiment, the transformer 143 serves to receive the system voltage, raise the system voltage to a preset operating voltage, and apply the operating voltage to the second conductor 120. In addition, it is possible to minimize a loss of voltage during a process of applying the voltage to the second conductor 120.

To this end, the transformer 143 is provided to be electrically insulated from the first conductor 110 and fixedly disposed outside a tubular body that constitutes the first conductor 110. That is, the transformer 143 is supplied with the system voltage from the processing object unit (not illustrated), raises the system voltage to the preset operating voltage at a position adjacent to the second conductor 120, and applies the operating voltage to the second conductor 120.

Further, in the present exemplary embodiment, the transformer 143 controls the preset operating voltage to be applied to the second conductor 120 with a direct current having a preset magnitude.

Meanwhile, in the system 100 for reducing particulate matter in exhaust gas according to the present exemplary embodiment, the first conductor 110 is provided in the form of the tubular body in which the exhaust gas flows.

In addition, the first conductor 110 is connected to a ground power supply and made of a material having electrical conductivity.

The first conductor 110 may adopt an exhaust gas pipe used for a vehicle or a semiconductor process, or a separate pipe may be provided and used by being in communication with the exhaust gas pipe.

The second conductor 120 is disposed in the first conductor 110 and has an emitter 150 that comes into contact with the exhaust gas and produces non-thermal plasma (NTP).

In order to produce the non-thermal plasma (NTP), a voltage, which is different by a predetermined voltage value from a voltage to be applied to the first conductor 110, is applied to the second conductor 120.

In this case, a predetermined level of direct current voltage needs to be continuously applied to the second conductor 120. Meanwhile, in the case of exhaust gas from a vehicle, a direct current voltage of -30 kV to -80 kV may be constantly applied.

Meanwhile, in order to produce the non-thermal plasma (NTP) based on the voltage difference between the first and second conductors 110 and 120, the insulator 130 is provided to electrically separate the second conductor 120 from the first conductor 110.

The insulator 130 is made of an electrically insulating material, and an example of the electrically insulating material may be ceramic. With surface roughness, it is possible to prevent particulate matters (PMs) or products degraded from the particulate matters from being accumulated on a surface of the insulator.

To this end, the insulator 130 may be made of ceramics and may have a surface treated with glaze. Therefore, it is possible to minimize the accumulation or deposition of carbon components on the surface of the insulator 130. In addition, it is possible to minimize the occurrence of arc, which causes a loss of plasma generation.

Meanwhile, in a case in which the insulator 130 is made of a ceramic material having a dielectric capacity, it is possible to remove the particulate matters (PMs) or the products degraded from the particulate matters by oxidizing the particulate matters (PMs) or the products degraded from the particulate matters on the surface of the insulator. In this case, in order to perform the oxidation, it is possible to adjust a thickness of the insulator 130 so that the insulator 130 is relatively thin.

Meanwhile, in the present exemplary embodiment, a voltage applying unit 140 is configured to continuously apply a preset level of direct current voltage to the second conductor 120.

The voltage applying unit 140 includes: a system control unit 141 configured to control the connection of power between the system 100 for reducing particulate matter in exhaust gas according to the present exemplary embodiment and an apparatus (the processing object unit) in which the system 100 is installed; and the transformer 143 configured to convert a voltage, applied from a power source of the apparatus, into a voltage required for the system 100 for reducing particulate matter in exhaust gas according to the present exemplary embodiment. The configuration in which the transformer 143 is provided and coupled to the first conductor 110 is as described above.

Specifically, in the case of a vehicle as an example, the system control unit 141 has a control function of turning on or off the system based on a driving state of the vehicle and at the same time, monitoring a state of a high-voltage part. When the high-voltage part is abnormal, the system control unit 141 may display the abnormal state by using a flickering LED. In this case, at RL, the system control unit 141 cuts off the supply of power to the transformer 143 in order to prevent the occurrence of other dangerous situations.

Meanwhile, a separate device is used to allow a user display to display a system operating situation by turning on the LED when the system operates normally or flickering the LED when the system operates abnormally.

The transformer 143 is a device configured to convert a low voltage into a high voltage and uses a multi-stage rectification method to generate a stable and high voltage with low ripple, thereby minimizing arcing that reduces system efficiency. Therefore, the transformer 143 allows the non-thermal plasma for removing particulate matters to always remain constant.

Meanwhile, in the present exemplary embodiment, the second conductor 120 includes a vertical rod 121, a horizontal rod 123, and the emitter 150.

The vertical rod 121 and the horizontal rod 123 are integrally connected to each other as an electric conductor, and a central portion between the vertical rod 121 and the horizontal rod 123 is bent.

The vertical rod 121 is disposed in a radial direction of the first conductor 110.

The vertical rod 121 penetrates the first conductor 110 in the radial direction. One end and the other end of the vertical rod 121 are disposed inside and outside the first conductor 110, respectively. The horizontal rod 123 to be described below is disposed at the end of the vertical rod 121 which is disposed inside the first conductor 110.

A part of the second conductor 120, which is exposed to the outside of the first conductor 110, is electrically connected to the transformer 143.

The horizontal rod 123 extends from the end of the vertical rod 121 in a direction parallel to a flow direction of the exhaust gas.

In this case, the horizontal rod 123 is disposed at a central portion of the first conductor 110. The horizontal rod 123 may be disposed accurately at the central portion of the first conductor 110 in order to effectively remove the particulate matters.

The emitter 150 is provided at the end of the horizontal rod 123 and has multiple protrusions 150a formed on the outer surface of the emitter 150 and each having a cutting edge.

The emitter 150 is disposed in a direction identical to the direction in which the horizontal rod 123 is disposed. The emitter 150 may be disposed accurately at a center of the inside of the first conductor 110 in order to effectively remove the particulate matters.

Next, in the present exemplary embodiment, the insulator 130 is made of an electrically insulating material and provided to surround the vertical rod 121. Therefore, the vertical rod 121 and the first conductor 110 are not electrically connected to each other in the state in which the vertical rod 121 penetrates the first conductor 110.

Specifically, while one end of the insulator 130 is disposed inside the first conductor 110, the other end of the insulator 130 is disposed outside the first conductor 110, thereby electrically separating the second conductor 120 and the first conductor.

Meanwhile, a coupling groove 131, into which the horizontal rod 123 is fitted, may be formed at one end of the insulator 130, which is disposed inside the first conductor 110 so that the coupling state between the first conductor 110 and the second conductor 120 is maintained securely.

Therefore, a bent portion of the second conductor 120, that is, a portion where the horizontal rod 123 and the vertical rod 121 meet together, is fitted and coupled into the coupling groove 131, such that a position of the second conductor 120 is not changed with respect to the insulator 130. Therefore, the second conductor 120 may be disposed at the central portion of the first conductor 110 in the direction parallel to the exhaust gas without a separate operation.

In addition, the coupling groove 131 may fix the insulator 130 and the second conductor 120 together with an anti-arcing member 160 to be described below, such that it is not necessary to interpose a separate bonding agent between the insulator 130 and the second conductor 120. Therefore, the assembly convenience is improved.

In addition, in the present exemplary embodiment, the insulator 130 is shaped inside the first conductor 110 such that a horizontal cross-sectional area thereof is decreased in a direction from a wall surface of the first conductor 110 toward the horizontal rod 123.

The anti-arcing member 160 is made of a material having resistance to corrosion (erosion) caused by electric discharge. The anti-arcing member 160 is configured to cover one of the two ends of the insulator 130 which is disposed inside the first conductor 110.

In this case, the anti-arcing member 160 is joined to the horizontal rod 123.

Meanwhile, the anti-arcing member 160 and the insulator 130 are coupled to each other outside the first conductor 110 by means of a threaded member 170 (specifically, an electrode connected to the transformer 143), and the threaded member 170 is secured to an end of the second conductor 120. Therefore, no additional component is required to couple the anti-arcing member 160 and the insulator 130.

Meanwhile, in the present exemplary embodiment, the emitter 150 is positioned at a center inside the first conductor 110, and the horizontal rod 123 extends in a direction from the vertical rod 121 toward an upstream of the exhaust gas. That is, the emitter 150 is disposed to face the exhaust gas.

In addition, in the present exemplary embodiment, negative power may be applied to the second conductor 120 in order to produce the non-thermal plasma (NTP).

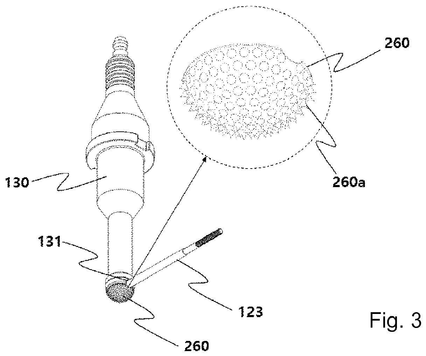

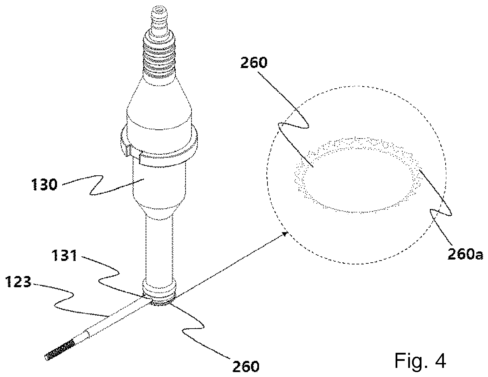

FIGS. 3 and 4 are views illustrating modified examples of the anti-arcing member in FIG. 2.

Referring to FIGS. 3 and 4, in the present exemplary embodiment, the anti-arcing member 260 has electric discharge protrusions 260a directed toward an inner surface of the first conductor 110 and each having a cutting edge.

With this configuration, in order to prevent the occurrence of arcing caused by the emitter 150, the anti-arcing member 260 has the electric discharge protrusions 260a in order to produce an arc at a position close to the surface of the insulator 130.

In this case, the electric discharge protrusions 260a of the anti-arcing member 260 also serve to assist the emitter 150 in producing the plasma.

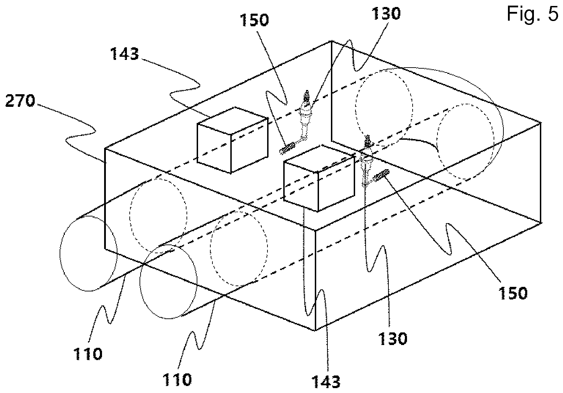

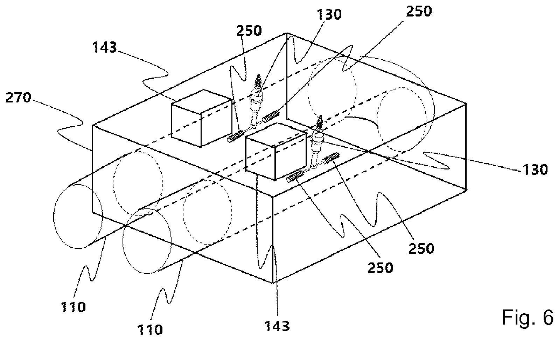

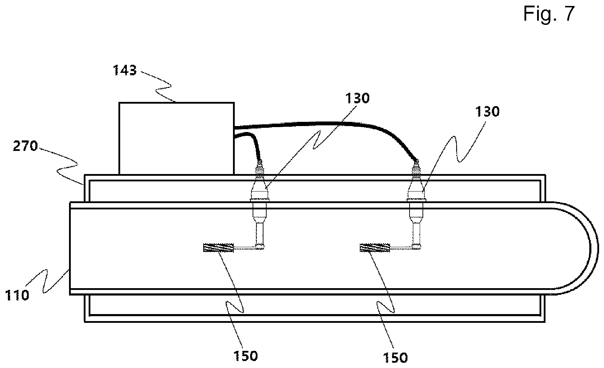

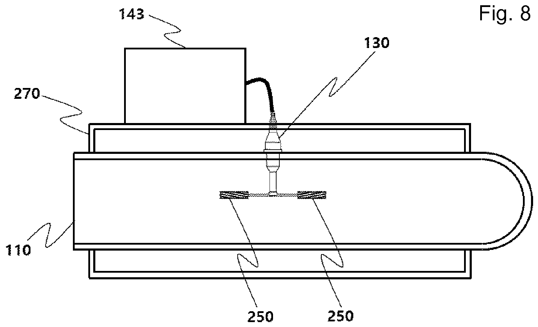

FIGS. 5 to 8 are views illustrating modified examples of the first and second conductors in FIG. 1, in which FIG. 7 is a vertical cross-sectional view of FIG. 5, and FIG. 8 is a vertical cross-sectional view of FIG. 6.

Referring to FIGS. 5 to 8, the system 100 for reducing particulate matter in exhaust gas according to the present exemplary embodiment is configured to improve efficiency in treating the particulate matters even in the case of a processing object unit (e.g., a truck) having a structure in which it is difficult to treat the particulate matters (PMs) because a discharge path for exhaust gas is short. In addition, the system for reducing particulate matters may be modularized and applied.

To this end, in the present exemplary embodiment, the first conductor 110 has the tubular body which is bent at least once so that an inlet and an outlet for exhaust gas are disposed side by side.

Therefore, the discharge path for the exhaust gas may extend long in the same space.

Meanwhile, in the present exemplary embodiment, the first conductor is received in a rectangular parallelepiped chamber 270 so that the inlet and the outlet of the first conductor are disposed outside the chamber 270. In this case, the transformer 143 is fixed at one side of an outer surface of the chamber 270.

With this configuration, an overall length of the first conductor 110 may be adjusted by modularizing and stacking the plurality of chambers 270. Further, a gap may be provided between the transformer 143 and the first conductor 110 in order to prevent the transformer 143 from being heated by the exhaust gas flowing in the first conductor 110.

Meanwhile, in the present exemplary embodiment, the first conductor 110 has a plurality of straight sections arranged in parallel with one another as the first conductor 110 is bent. The one or more second conductors 120 may be provided in each of the plurality of straight sections.

In addition, in the present exemplary embodiment, the second conductor 120 may be provided such that the emitters 150 are provided at one end and the other end of the second conductor 120 in a longitudinal direction of each of the plurality of straight sections. Therefore, a space occupied by the second conductor 120 may be reduced, thereby further improving space efficiency of the system 100 for reducing particulate matter in exhaust gas.

## Claims

1. A system for reducing particulate matter in exhaust gas, the system comprising:
a processing object unit having a preset system voltage and configured to produce exhaust gas containing particulate matters (PMs);
a first conductor provided in the form of a tubular body in which the exhaust gas flows and to which a ground power supply is connected;
a second conductor disposed in the first conductor and having an emitter which comes into contact with the exhaust gas and generates non-thermal plasma (NTP);
an insulator configured to electrically separate the second conductor from the first conductor; and
a transformer provided to be electrically insulated from the first conductor and fixedly disposed outside the tubular body that constitutes the first conductor, the transformer being configured to receive the system voltage, raise the system voltage to a preset operating voltage, and apply the preset operating voltage to the second conductor,
wherein the preset operating voltage is applied such that a direct current voltage having a preset magnitude is continuously applied.

2. The system of claim 1, comprising:
a system control unit configured to control connection of power between the system voltage of the processing object unit and the transformer.

3. The system of claim 1, wherein the second conductor comprises:
a vertical rod disposed in a radial direction of the first conductor;
a horizontal rod extending from an end of the vertical rod in a direction parallel to a flow direction of the exhaust gas; and
an emitter provided at an end of the horizontal rod and having a plurality of protrusions formed on an outer surface of the emitter and each having a cutting edge.

4. The system of claim 3, wherein the insulator is made of an electrically insulating material, made of a ceramic material having a surface treated with glaze, and provided to surround the vertical rod,
wherein one end of the insulator is disposed inside the first conductor, and the other end of the insulator is disposed outside the first conductor to electrically separate the second conductor from the first conductor, and
wherein a coupling groove, to which the horizontal rod is fitted, is provided at one end of the insulator, which is disposed in the first conductor, so that a coupled state between the first conductor and the second conductor is constantly maintained.

5. The system of claim 4, comprising:
an anti-arcing member provided to cover one of the two ends of the insulator which is disposed inside the first conductor,
wherein the anti-arcing member is joined and electrically connected to the horizontal rod and made of a material having resistance to corrosion (erosion) caused by electric discharge.

6. The system of claim 5, wherein the anti-arcing member has electric discharge protrusions directed toward an inner surface of the first conductor and each having a cutting edge.

7. The system of claim 3, wherein the first conductor has the tubular body which is bent at least once so that an inlet and an outlet for the exhaust gas are disposed side by side,
wherein the system has a rectangular parallelepiped chamber in which the first conductor is received,
wherein the inlet and the outlet are disposed outside the chamber, and
wherein the transformer is fixed at one side of an outer surface of the chamber.

8. The system of claim 7, wherein the first conductor has a plurality of straight sections arranged in parallel with one another as the first conductor is bent, and
wherein the one or more second conductors are provided in each of the plurality of straight sections.

9. The system of claim 8, wherein the second conductor is provided such that the emitters are provided at one end and the other end of the second conductor in a longitudinal direction of each of the plurality of straight sections.
